# EUROPEAN PATENT APPLICATION

(11) **EP 4 579 224 A1**
(43) Date of publication of application: **02.07.2025**
(21) Application number: 23383383.9
(22) Date of filing: 27.12.2023
(51) Int. Cl.: G01N 21/88

(54) **DEVICE AND METHOD FOR DETERMINING DEFECTS IN A PART OR PRESENCE OF UNWANTED MATERIALS ADHERED TO A PART**

(71) Applicant: Instituto Tecnológico De Informática, 46980 Paterna, Valencia (ES)
(72) Inventor: PÉREZ SOLER, Javier, 46980 Paterna, Valencia (ES); GARRIGUES CARBÓ, Pau, 46980 Paterna, Valencia (ES); PÉREZ CORTÉS, Juan Carlos, 46011 Valencia (ES)
(74) Representative: ABG Intellectual Property Law, S.L.

(57) **Abstract**

The present invention relates to a device for determining the presence of defects in a part and/or of unwanted materials adhered to the surface of the part. The present invention also relates to a method for determining said defects and/or unwanted materials adhered to the part, the method being carried out by means of the device.

## Description

### OBJECT OF THE INVENTION

The present invention relates to a device for determining the presence of defects in a part and/or of unwanted materials adhered to the surface of the part. The present invention also relates to a method for determining said defects and/or unwanted materials adhered to the part, the method being carried out by means of the device.

More particularly, the device and the method of the invention make use of one or more cameras to acquire images of the part and determine, by means of processing said images, the presence of defects in the part and/or of unwanted materials adhered to the surface of the part, preventing glare which may alter detection precision from appearing in said images.

### BACKGROUND OF THE INVENTION

In the context of the invention, the acquisition of images from which the shape of one part is distinguished and possible defects in said part and/or materials adhered to said part are detected can be performed by using Zero Gravity 3D, ZG3D, technology described in patent EP2511653. This patent details a system in which the part falls through the capture space of the camera or cameras so that there is no securing or support element of any type that conceals any portion of the part. In that sense, ZG3D provides the flexibility of being able to analyze parts in free fall without any type of fixed orientation, ensuring a scan of the entire part without concealment.

Alternatively, to position the part in the capture space of the camera(s), a launcher like the one described in patent EP3418675, which likewise allows analyzing the part without any type of concealment, can be used.

Alternatively, the positioning of the part in the capture space of the camera(s) could be performed by any other means.

A problem to be solved by the techniques described above is the occurrence of glare in the images, which would lead to erroneous or imprecise detections of the defects in the parts and/or of the unwanted materials adhered to the parts. This glare occurs in the images captured by the camera or cameras due to reflections of the light emitted by the systems illuminating the part and the surface finish of the parts themselves.

The defects and unwanted materials in the parts are much more visible depending on the orientation of the part with respect to the illumination system. In that sense, front illumination accentuates some types of defects, but causes the occurrence of unwanted glare in the images due to the reflection of the base material itself of the part, which hinders the analysis of the surface of said part.

In contrast, with the use of a polarized light source and a polarized filter in the optic of the camera or cameras, this glare disappears from the images (since the reflection is not aligned with the filter of the camera or cameras). Furthermore, if the material of the target part repolarizes the light in all directions, said material is more visible in the images (since part of the repolarized light is aligned with the filter of the camera or cameras). Therefore, since said material is more visible in the images, it is easier to differentiate it from other materials that do not repolarize light.

In an open environment in which unexpected reflections of light do not occur, this configuration based on a polarized light source and a polarized filter in the optic of the camera or cameras is sufficient to cancel the glare. However, in a closed environment, like in the ZeroGravity 3D systems described above, the reflection of the light off surfaces other than the part itself acts as an unpolarized and uncontrolled light source. In that sense, for this configuration to be valid in these closed environments, the surface that acts as a background of the images in the closed environment could be set to black, for example by means of painting or by material selection; said surface would thereby absorb all the light it receives, preventing the polarization of the light from changing.

However, the use of environments of this type with a black background surface prevents, or at least hinders, correctly detecting the shape of dark colored parts or of materials that do not repolarize light given that they will also be seen as black or very nearly black; therefore, a device with an environment of this type is unable to locate the defects and/or the unwanted materials on the surface of said part with precision.

In that sense, there is a need for a system that identifies the shape of a part and detects defects and materials adhered to said part that is able to cancel unwanted glare in the images of the part captured by the camera or cameras of the system, since said unwanted glare may affect the correct detection of said defects and materials adhered to the part.

### DESCRIPTION OF THE INVENTION

The present invention proposes a solution to the preceding problems by means of a device for determining in a part made of a first material the presence of defects and/or of one or more materials on its surface different from the first material according to claim 1 and a method for determining in a part made of a first material the presence of defects and/or of one or more materials on its surface different from the first material according to claim 12. The dependent claims define preferred embodiments of the invention.

In a first inventive aspect, the invention provides a device for determining in a part made of a first material the presence of defects and/or at least one second material on its surface different from the first material, wherein
- either the first material is such that it repolarizes an incident light on the part, and the second material or the defects are such that they do not repolarize the incident light,
- or the first material is such that it does not repolarize the incident light on the part, and the second material or the defects are such that they do repolarize the incident light;
wherein the device comprises:
- at least one camera for capturing images, the at least one camera being oriented towards an area of interest and comprising an image sensor and an optic having an optical axis, wherein the optic is configured to focus an image on the image sensor and to frame at least part of the area of interest;
- a background surface configured to be the image background, at least in the framing of the optic of the at least one camera;
- at least one polarized light source with linear polarization located proximal to the at least one camera and configured to, in the operating mode, illuminate a part located between the at least one camera and the background surface;
- a processor configured to receive the captured images and process them;
   wherein
- the optic of the at least one camera comprises a linearly polarized light polarizer wherein the polarization direction is oriented substantially perpendicular to the polarization direction of the polarized light emitted by the at least one light source when the light source is activated in the operating mode emitting polarized light;
- the image sensor of the at least one camera is sensitive at least to a first wavelength and to a second wavelength, wherein the second wavelength is different from the first wavelength;
- the background surface has a color corresponding to the first wavelength, said color being different from the color of the part;
- the processor is further configured to carry out the following steps:
   a. activating the polarized light source and the camera, capturing an image of a part wherein the image comprises at least one first channel corresponding to the image captured by the sensor in the first wavelength and a second channel corresponding to the image captured by the sensor in the second wavelength;
   b. processing the received image by carrying out the following steps:
      - by using the first channel of the image, segmenting the received image by establishing a path which determines the boundary separating the regions of the image which correspond to the background and to the part;
      - establishing the region of the image which corresponds to the inside of the boundary as the image corresponding to the second channel.

The device of the first inventive aspect comprises one or more cameras oriented in space towards an area of interest in which the part to be captured is positioned. Said camera or cameras frame the area of interest.

The device further comprises a background surface, which will also be captured by the camera or cameras, such that said surface will be the background of the captured image or images.

For each camera, the device comprises a linearly polarized light source, which is located proximal to said camera. The purpose of this light source is to illuminate the part to be captured when said part is located between the camera and the background surface.

Lastly, the device comprises a processor capable of receiving and processing the images from the cameras. Throughout the description, processor will be understood to mean any unit, means or apparatus capable of receiving, emitting and processing data and instructions.

The processor is configured to activate the polarized light source and the camera, capturing an image of the illuminated part.

Each camera comprises a linearly polarized light polarizer (or filter), wherein the polarization direction is oriented substantially perpendicular to the polarization direction of the polarized light emitted by the light source located proximal to the camera. In other words, each camera comprises a polarized filter perpendicular to the polarized light illuminating the part.

When a part to be captured has unwanted material (other than the actual material of the part) adhered to its surface and/or a certain defect, this unwanted material and/or defect is much more visible depending on the orientation of the part with respect to the light source illuminating said part. In that sense, since the device comprises a polarized light source and a polarized filter in the camera or cameras, the unwanted material and/or the defect stands out with respect to the part and, therefore, is much more distinguishable in the captured images.

More particularly, when the material of the part to be captured repolarizes the incident light and the unwanted material and/or the defect do not, said unwanted material and/or the defect are more distinguishable in the images. Likewise, if the material of the part does not repolarize the incident light but the unwanted material and/or the defect do, said unwanted material and/or the defect are also more distinguishable in the images.

In one embodiment, the light source and the polarizer are adjusted perpendicularly for the cancellation thereof.

In a device like the device of the first inventive aspect, the background surface can belong to an open or closed environment. In a closed environment, for example, a closed enclosure that is spherical or in the form of a barrel in which the camera or cameras are arranged, the reflection of the light off the different surfaces of the device, particularly off the background surface, acts like an unpolarized and uncontrolled light source. Once the images have been acquired by the camera or cameras, these reflections result in unwanted glare in said images which hinder distinguishing between the unwanted material adhered to the surface of the part and/or the defect(s) the part has on its surface.

In these closed environments, to cancel the reflections of the light, the background surface can be set to black, for example by painting or by material selection, in order to absorb the light it receives, which prevents the polarization of the light from changing when it strikes said background surface. However, the camera or cameras of a device with a black background surface are unable to identify the shape of the part and, therefore, do not correctly detect the defects and/or the unwanted materials on the surface of said part.

In order to not only eliminate the unwanted glare in the images but to also correctly identify the shape of the part when said part is a dark color or does not repolarize the light causing the same effect, i.e., the fact that it appears black or very nearly black in the image, the device of the first inventive aspect further has the following features:
- the image sensor of the camera or cameras is sensitive at least to a first wavelength and to a second wavelength, with the first wavelength and second wavelength being different;
- the background surface has a color corresponding to the first wavelength, said color being different from the color of the part;
- the processor activates the light source or sources and the camera or cameras to capture the images of the illuminated part;
- each image captured by each camera comprises at least one first channel corresponding to the image captured by the sensor in the first wavelength and a second channel corresponding to the image captured by the sensor in the second wavelength; and
- the processor is configured to process the received image by carrying out the following steps:
   - by using the first channel of the image, segmenting the received image by establishing a path which determines the boundary separating the regions of the image which correspond to the background and to the part; and
   - establishing the region of the image which corresponds to the inside of the boundary as the image corresponding to the second channel.

In the device of the invention, the background surface (for example, the inside of the closed enclosure in which the camera or cameras are arranged) is set to a color corresponding to the first wavelength, said color being different from the color of the part to be captured.

In one embodiment, the part to be captured is dark colored, preferably black, or does not repolarize the light.

With this configuration, all the uncontrolled reflections correspond to the color of the first wavelength, which are not filtered by the light polarizer of the optic of the camera or cameras. Therefore, in the first channel of an image the part can be seen as being distinguishable with respect to the colored background according to the first wavelength, and the processor can carry out the segmentation of the part with respect to the background with high precision. Moreover, in the second channel of the image, which is free of glare, the unwanted material adhered to the surface of the part and/or the defect on the surface of the part are clearly distinguished. Therefore, the processor establishes in the image it is processing that the region corresponding with the inside of the part (resulting from the segmentation) must correspond with the region of the second channel of the image.

Advantageously, in the processed images the part is perfectly distinguished with respect to the background colored in a color corresponding to the first wavelength, where colored is understood to mean that it is neither black nor transparent, and the unwanted material and/or the defects on the part are also perfectly distinguished, said images being free of glare, such that the precision in the identification of the part and in the distinction of such unwanted material and/or defects is maximized.

This distinction can be carried out visually by the user who is using the device or automatically by means of the processor.

In one embodiment, the first wavelength corresponds to the color blue, preferably pure blue, and the second wavelength corresponds to the color red.

In a particular embodiment, the processor of the device is further configured to determine the presence of defects and/or of the at least one second material on the surface of the part different from the first material of the part based on the processed image.

Advantageously, in this embodiment it is the processor itself which distinguishes the defects or the unwanted material on the part automatically, without the need for the intervention of the user who is using the device.

In a particular embodiment, the light from the polarized light source comprises at least the first wavelength and the second wavelength, preferably being white light.

In a particular example, the white light is 1 kW.

In a particular embodiment, the background surface is configured to be the image background, at least in an area illuminated by the polarized light source.

In a particular embodiment, the device further comprises means for placing the part in the area of interest either by free fall or by means of a launch.

This embodiment uses Zero Gravity 3D, ZG3D, technology based on a system in which the part falls through the capture space of the camera or cameras for which there is no securing or support element of any type that conceals any portion of the part.

Alternatively, the part can be positioned in the capture space of the camera(s) by using a launcher, the part describing a down-up movement, which likewise allows analyzing the part without any type of concealment.

With any of these two configurations, the device has the advantage of the surface being inspected in its entirety without any of its portions being concealed, precisely such as a defect or unwanted material adhered to the surface of the part. The probability of distinguishing said defect and/or said unwanted material thereby increases.

In other embodiments, the positioning of the part in the capture space of the camera(s) could be performed by any other means.

In a particular embodiment, the optical axis of the at least one camera and the preferred illumination direction of the polarized light source are parallel, preferably being configured as an illumination ring around the optic of the camera.

This particular configuration between the camera and the polarized light source seeks to capture images of the part with optimal illumination.

In a particular embodiment, the at least one camera is a plurality of cameras, and wherein:
- each of the cameras is located in space in a different position and oriented towards the area of interest;
- each of the cameras is located proximal to a different polarized light source which is configured to, in the operating mode, illuminate the part;
- the optic of each of the cameras comprises a linear light polarizer, wherein the polarization direction is oriented substantially perpendicular to the polarization direction of the polarized light emitted by its corresponding polarized light source when the light source is activated in the operating mode emitting polarized light;
- each of the sensors of the cameras is sensitive at least to the first wavelength and to the second wavelength;
- the processor is configured to carry out steps a) and b) for each of the cameras.

Advantageously, as a result of the plurality of cameras, the images of the part are acquired from different points of view so, in the event of there being unwanted material on the surface of the part and/or a defect in any portion of the surface of said part, at least one of said cameras could capture an image in which the unwanted material and/or the defect is visible.

Therefore, this plurality of cameras increases the possibility of capturing at least one image of the part in which the unwanted material and/or the defect on said part is correctly visualized.

In a particular embodiment, the processor of the device is further configured to determine the presence of defects and/or of the at least one second material on the surface of the part different from the first material of the part based on the images processed in step b) for each of the cameras.

Advantageously, the processor automatically detects the unwanted materials and/or defects, without the need for the intervention of the user who is using the device.

In a particular embodiment, the activation of each of the cameras and of the corresponding light source located proximal to each camera is sequential, such that the activation of one of the cameras and of the corresponding light source located proximal to said camera is carried out by keeping the remaining cameras and the polarized light sources switched off.

In this embodiment, the cameras take pictures sequentially together with the light source such that they do not interfere with each other. The cameras of the device of the invention can take pictures with an integration time that is sufficiently short so as to not affect the quality of the image obtained.

In a particular embodiment, the background surface for each of the cameras is configured as an essentially closed surface.

Advantageously, the device of the invention with this essentially closed background surface manages not only for the images not to be affected by the reflections of light which are unavoidable in closed surfaces of this type, but it also correctly identifies the shape of the part, regardless of its color, provided that the color is different from the color of the background.

In a particular embodiment, the cameras and the corresponding polarized light sources located proximal to the cameras are distributed in a sphere such that the optical axes of all the cameras and the preferred illumination orientation of each corresponding light source are oriented towards an inner region of the sphere, the inner region of the sphere being configured to house the part therein.

In this embodiment, the cameras are distributed in a closed surface in the form of a sphere, oriented towards an inner region thereof. This inner region is comprised in, comprises or coincides with the area of interest in which the part to be captured is positioned. This geometric distribution is advantageous to enable viewing the part from different points of view, thereby increasing the probabilities of capturing at least one image of the part in which the unwanted material and/or the defect on said part is correctly visualized.

In a particular embodiment, the inner region of the sphere comprises the center of the sphere.

In a particular embodiment, the cameras and the corresponding polarized light sources located proximal to the cameras are distributed in a barrel such that the optical axes of all the cameras and the preferred illumination orientation of each light source are oriented towards an inner region of the barrel, the inner region of the barrel being configured to house the part therein.

In this embodiment, the cameras are distributed in a closed surface in the form of a barrel, oriented towards an inner region of the barrel. This inner region is comprised in, comprises or coincides with the area of interest in which the part to be captured is positioned. This geometric distribution is advantageous to enable viewing the part from different points of view, thereby increasing the probabilities of capturing at least one image of the part in which the unwanted material and/or the defect on said part is correctly visualized.

Throughout the description, surface in the form of a barrel will be understood to mean a closed surface in the form of a cylinder with two upper and lower bases having an outward bulge in the central area thereof.

In a particular embodiment, the inner region of the barrel at least partially comprises an axis of the barrel, the axis of the barrel connecting the centers of the upper and lower bases thereof.

In a particular embodiment, the means for placing the part in the area of interest are configured to place the part in the inner region of the sphere or of the barrel either by free fall or by means of a launch.

In this embodiment, the part is placed at different points of the area of interest by moving up-down (if the means for placing the part operate by free fall, like in ZG3D technology explained above) or down-up (if the means for placing the part use a launcher).

In this embodiment, in addition to the advantages of having a closed surface in the form of a sphere and barrel, it also achieves not requiring securing or support elements concealing a portion of the part in the images acquired by the cameras. Therefore, the probability of capturing at least one image of the part in which the unwanted material and/or the defect on said part is correctly visualized is even greater.

Furthermore, in a more advantageous manner, for the embodiment in which the cameras of the device are distributed in a surface in the form of a barrel, said cameras can point to different points of the axis of the barrel to capture the part during its movement (up-down or down-up, depending on the type of means for placing the part). It is understood that the path of the part essentially follows the axis of the barrel, so it is located in the capture region of a camera at one time or another. The part is thereby always captured on the axis, in a capture location of the camera that has at least that location on the axis in focus, and at the same distance with maximum resolution. That is, even if there are cameras oriented towards different points on the axis, if the part passes through the axis, then at different instants of time the same distance and focus conditions are present in different cameras.

In other embodiments, the positioning of the part in the capture space of the camera(s) could be performed by any other means.

In a particular embodiment, the processor of the device is further configured to generate a computational model of the part by means of reconstruction based on the images processed in step b), either directly or by means of an image post-processing.

In this embodiment, the processor can generate the reconstruction of the part for a better visualization thereof, such that the location on the surface of the part of the unwanted material and/or of the defect is identified with precision.

In a second inventive aspect, the invention provides a method for determining in a part made of a first material the presence of defects and/or of one or more materials on its surface different from the first material by means of the device of the first inventive aspect, wherein
- either the first material is such that it repolarizes an incident light on the part, and the second material or the defects are such that they do not repolarize the incident light,
- or the first material is such that it does not repolarize the incident light on the part, and the second material or the defects are such that they do repolarize the incident light,
wherein the method comprises the following steps:
a activating, by means of the processor, the polarized light source and the camera of the device, capturing an image of a part wherein the image comprises at least one first channel corresponding to the image captured by the sensor in the first wavelength and a second channel corresponding to the image captured by the sensor in the second wavelength;
b processing, by means of the processor, the received image by carrying out the following steps:
   - by using the first channel of the image, segmenting the received image by establishing a path which determines the boundary separating the regions of the image which correspond to the background and to the part;
   - establishing the region of the image which corresponds to the inside of the boundary as the image corresponding to the second channel; and
c determining the presence of defects and/or of the at least one second material on the surface of the part different from the first material of the part based on the processed image.

Advantageously, as a result of the method of the second inventive aspect, defects and/or unwanted materials on the surface of a part are detected with high precision. Particularly, this method obtains one or more processed images in which the part captured by the cameras of the device is perfectly distinguished with respect to the background colored in a color corresponding to the first wavelength, where colored is understood to mean that it is neither black nor transparent, and the presence of the unwanted material and/or the defect on the part are also perfectly distinguished, said images being free of glare, such that the precision in the identification of the part and in the detection of such unwanted material and/or defects is maximized.

This detection can be carried out visually by the user who is using the device or automatically by means of the processor.

In a particular embodiment, step c) of the method is carried out by the processor.

Advantageously, in that embodiment it is the processor itself that detects the unwanted material and/or the defect on the part automatically without the need for the intervention of the user who is using the device.

In a particular embodiment, the activation of each of the cameras and of the light source located proximal to each camera of the device in step a) is sequential, such that the activation of one of the cameras and of the corresponding light source located proximal to said camera is carried out by keeping the remaining cameras and the polarized light sources switched off.

In a particular embodiment, the method comprises an additional step of generating, by means of the processor of the device, a computational model of the part by means of reconstruction based on the images processed in step b), either directly or by means of an image post-processing.

In this embodiment, the processor can generate the reconstruction of the part for a better visualization thereof, such that the location on the surface of the part of each unwanted material and/or defect is identified with precision.

All the features and/or method steps described in this specification (including the claims, description and drawings) can be combined in any combination, with the exception of combinations of such mutually exclusive features.

### DESCRIPTION OF THE DRAWINGS

These and other features and advantages of the invention will become more apparent from the following detailed description of a preferred embodiment, given solely by way of illustrative and non-limiting example in reference to the attached figures.
Figures 1a-1b show the device of the invention according to two embodiments in which the background surface is open and closed.
Figures 2a-2b show the device of the invention according to an embodiment in which the device comprises means for placing the part in the area of interest.
Figure 3 shows the device of the invention according to an embodiment in which the device comprises a plurality of cameras.
Figures 4a-4b show the device of the invention according to an embodiment in which the background surface is in the form of a barrel. Figure 4a shows a perspective view of the device and Figure 4b shows upper and lower plan views, as well as a front view of the device.
Figure 5 shows the processed images obtained by the device of the invention according to an embodiment.

### DETAILED DESCRIPTION OF THE INVENTION

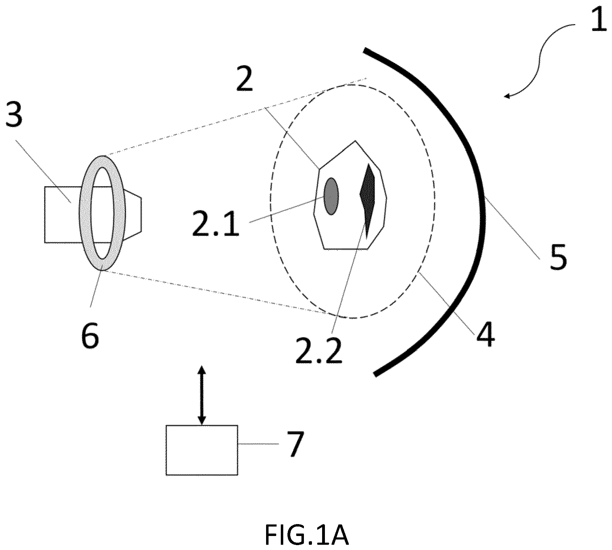

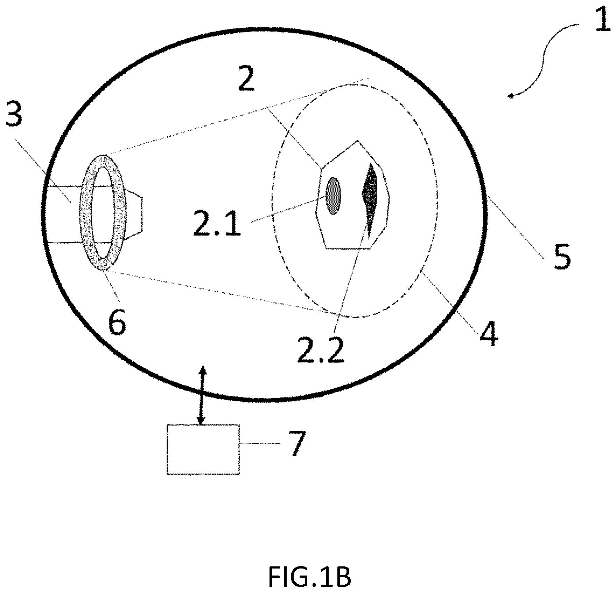

Figures 1a and 1b show the device (1) of the invention according to two embodiments in which the background surface (5) is open and closed.

In both figures, the device (1) shown seeks to determine in a part (2) made of a first material the presence of defects (2.1) and/or at least one second material (2.2) on its surface different from the first material.

The first material of the part (2) is such that it repolarizes an incident light on the part (2), and the second material (2.2) or the defects (2.1) are such that they do not repolarize the incident light. Alternatively, the first material is such that it does not repolarize the incident light on the part (2), and the second material (2.2) or the defects (2.1) are such that they do repolarize the incident light.

As shown in these figures, the device (1) comprises:
- a camera (3) for capturing images oriented towards an area of interest (4). This camera comprises an image sensor and an optic having an optical axis, the optic being configured to focus an image on the image sensor and to partially or completely frame the area of interest (4).
- A background surface (5) configured to be the image background, at least in the framing of the optic of the at least one camera (3). In Figure 1a, the background surface (5) is open and in Figure 1b the background surface (5) is closed.
- A polarized light source (6) with linear polarization located proximal to the camera (3). The light source (6) is configured to, in the operating mode, illuminate the part (2) when the part is placed between the camera (3) and the background surface (5). In a particular embodiment, the background surface (5) is configured to be the image background at least in an area illuminated by the polarized light source (6).
- A processor (7) configured to receive the images captured by the camera (3) and to process them.

As mentioned, the background surface (5) of the device (1) of Figure 1a is open and that of Figure 1b is closed. For the case of Figure 1b, in this particular example the background surface (5) being a spherical closed enclosure, the reflection of the light off the different surfaces of the device (1), particularly off the background surface (5), acts as an unpolarized and uncontrolled light source. Once the images have been acquired by the camera (3), these reflections result in unwanted glare in said images which hinder the distinction of the unwanted second material (2.2) adhered to the surface of the part (2) and/or of the defects (2.1) that the part (2) has on its surface. Other open or closed background surfaces (5) are likewise valid in the context of the invention.

To cancel the unwanted glare in the images as well as to suitably identify the shape of the part (2), the device (1) has the following features.

The optic of the camera (3) comprises a linearly polarized light polarizer. The polarization direction of said polarizer is oriented substantially perpendicular to the polarization direction of the polarized light emitted by the light source (6), when the light source (6) is activated in the operating mode emitting polarized light.

The image sensor of the camera (3) is sensitive at least to a first wavelength and to a second wavelength, wherein the second wavelength is different from the first wavelength. In one example, the first wavelength corresponds to the color blue and the second wavelength corresponds to the color red.

The background surface (5) has a color corresponding to the first wavelength. This color, furthermore, is different from the color of the part (2) to be captured. For example, if the part is black, the background surface (5) must be of a color other than black, such as blue.

The processor (7) of the device is further configured to carry out various actions.

Firstly, the processor (7) activates the polarized light source (6) and the camera (3) for said camera (3) to capture an image of the part (2) which is being illuminated by the light source (6). The image comprises at least one first channel corresponding to the image captured by the sensor in the first wavelength and a second channel corresponding to the image captured by the sensor in the second wavelength.

Once the image is captured by means of the camera (3), the processor (7) receives and processes the image by carrying out the following steps:
- Segmenting the received image by using the first channel of the image. In that sense, the processor (7) establishes a path which determines the boundary separating the regions of the image which correspond to the background and to the part (2).
- Establishing the region of the image which corresponds to the inside of the boundary as the image corresponding to the second channel.

With the device (1) shown in these figures, all the uncontrolled reflections correspond to the color of the first wavelength, which are not filtered by the light polarizer of the optic of the camera (3). Therefore, in the first channel of an image the part (2) can be seen as being distinguishable with respect to the background colored according to the first wavelength, and the processor (7) can carry out the segmentation of the part (2) with respect to the background with high precision. Moreover, in the second channel of the image, which is free of glare, the unwanted material (2.2) adhered to the surface of the part (2) and/or the defect (2.1) on the surface of the part (2) are clearly distinguished. Therefore, the processor (7) establishes in the image it is processing that the region corresponding with the inside of the part (2) (resulting from the segmentation) must correspond with the region of the second channel of the image.

Advantageously, in the processed images the part (2) is perfectly distinguished with respect to the background colored in a color corresponding to the first wavelength, where colored is understood to mean that it is neither black nor transparent, and the unwanted second material (2.2) and/or the defects (2.1) on the part (2) are also perfectly distinguished, said images being free of glare, such that the precision in the distinction of such unwanted material (2.2) and/or defects (2.1) is maximized.

This distinction can be carried out visually by the user who is using the device (1) or automatically by means of the processor (7). In the second case, the processor (7) is further configured to determine the presence of defects (2.1) and/or of one or more materials on the surface of the part (2) different from the first material of the part (2) based on the processed image.

In the device (1) shown in these figures, the light from the polarized light source (6) comprises at least the first wavelength and the second wavelength. Preferably, the light emitted by the light source (6) is white light. In a particular example, the white light is 1 kW. Other types of light are likewise valid in the context of the invention.

In the device (1) shown in these figures, the optical axis of the camera (3) and the preferred illumination direction of the polarized light source (6) are parallel. More particularly, the light source (6) is an illumination ring arranged around the optic of the camera (3). Other configurations are likewise valid in the context of the invention.

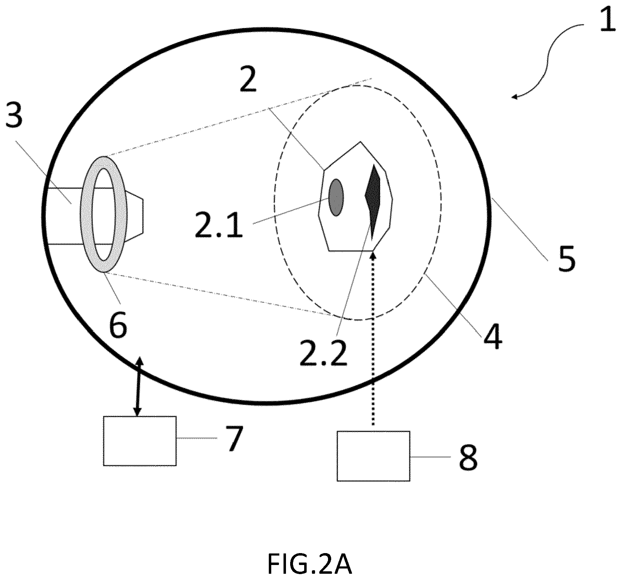

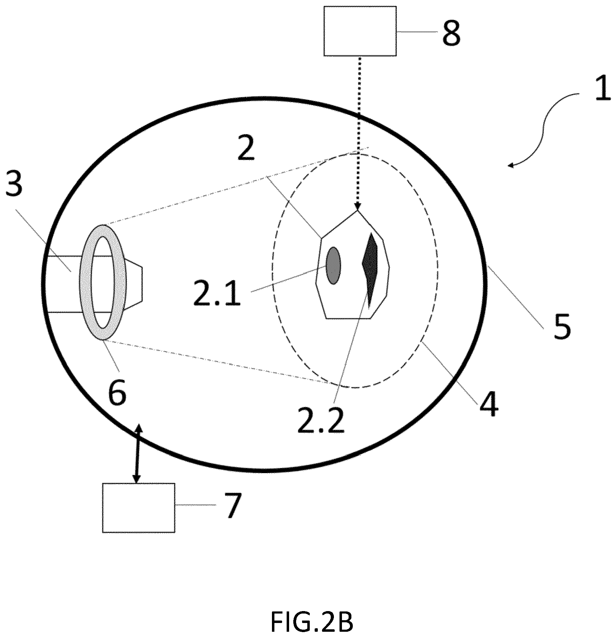

Figures 2a and 2b show the device (1) of the invention according to an embodiment in which the device (1) of Figures 1a and 1b further comprises means (8) for placing the part (2) in the area of interest (4). Particularly, in Figure 2a, the means (8) place the part (2) in the area of interest (4) by means of a launch and, in Figure 2b, the means (8) place the part (2) in the area of interest (4) by free fall.

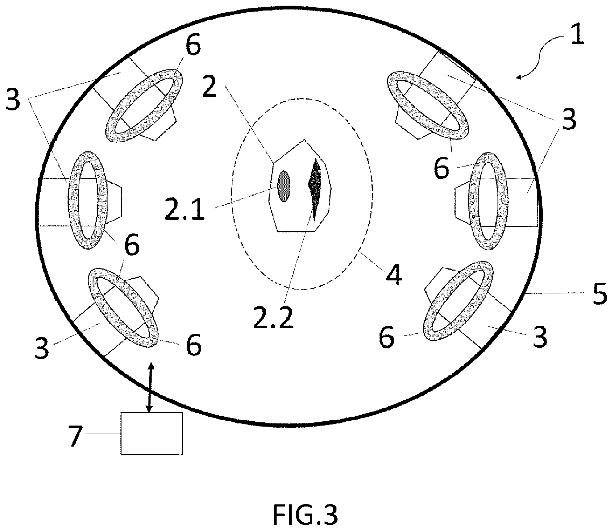

Figure 3 shows the device (1) of the invention according to an embodiment in which the device (1) comprises a plurality of cameras (3). All the embodiments described for Figures 1a, 1b, 2a and 2b are applicable to the embodiment of Figure 3.

In this device (1):
- each of the cameras (3) is located in space in a different position and oriented towards the area of interest (4);
- each of the cameras (3) is located proximal to a different polarized light source (6) which is configured to, in the operating mode, illuminate the part (2);
- the optic of each of the cameras (3) comprises a linear light polarizer wherein the polarization direction is oriented substantially perpendicular to the polarization direction of the polarized light emitted by its corresponding polarized light source (6) when the light source (6) is activated in the operating mode emitting polarized light;
- each of the sensors of the cameras (3) is sensitive at least to the first wavelength and to the second wavelength;
- the processor (7) is configured to carry out what is describe above for each of the cameras (3).

In the device of Figure 3, the background surface (5) for each of the cameras (3) is configured as an essentially closed surface. Other types of closed and open surfaces are likewise valid in the context of the invention.

In a particular embodiment, the processor (7) is further configured to determine the presence of defects (2.1) and/or of the at least one second material (2.2) on the surface of the part (2) different from the first material of the part (2) based on the processed images for each of the cameras (3).

In one embodiment, the activation (by the processor (7)) of each of the cameras (3) and of the corresponding light source (6) located proximal to each camera (3) is sequential, such that the activation of one of the cameras (3) and of the corresponding light source (6) located proximal to said camera (3) is carried out by keeping the remaining cameras (3) and polarized light sources (6) switched off.

In one embodiment, the processor (7) is further configured to generate a computational model of the part (2) by means of reconstruction based on the processed images, either directly or by means of an image post-processing.

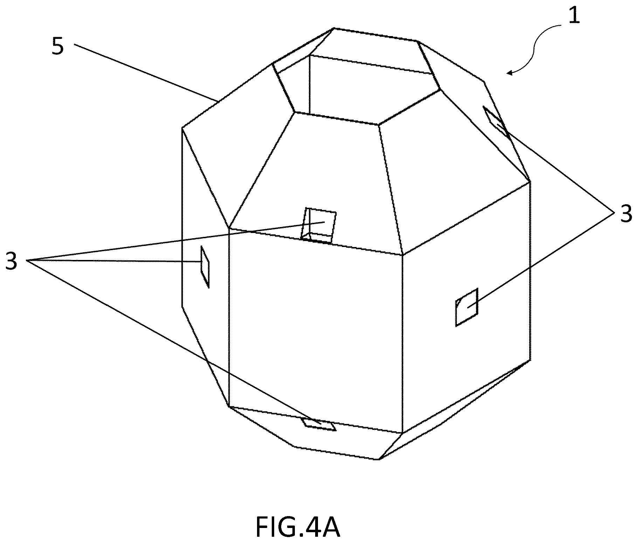

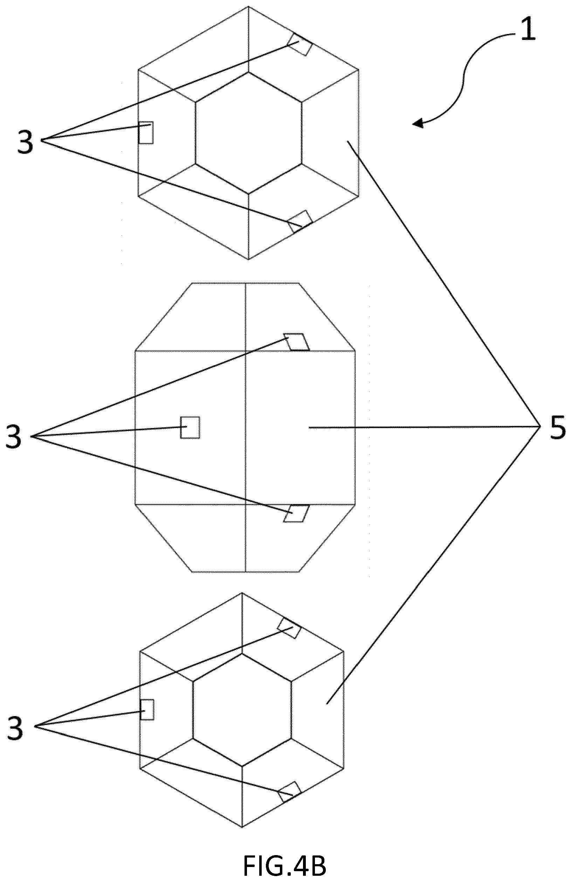

Figures 4a and 4b show the device (1) of the invention according to an embodiment in which the cameras (3) and the corresponding polarized light sources (6) located proximal to the cameras (3) are distributed in a barrel such that the optical axes of all the cameras (3) and the preferred illumination orientation of each light source (6) are oriented towards an inner region of the barrel, the inner region of the barrel being configured to house the part (2) therein. All the embodiments described for Figures 1a, 1b, 2a, 2b, and 3 are applicable to the embodiment of Figures 4a and 4b.

Figure 4a shows a perspective view of the device (1) and Figure 4b shows upper and lower plan views, as well as a front view of the device (1).

In a particular case, the area of interest (4) coincides with, comprises or is comprised in the inner region.

In the device (1) of these figures, furthermore, the inner region of the barrel at least partially comprises an axis of the barrel. The axis of the barrel connects the centers of the upper and lower bases thereof.

Optionally, the device (1) of these figures comprises means (8) for placing the part (2) in the area of interest (4). More particularly, the means (8) are configured to place the part (2) in the inner region of the barrel either by free fall or by means of a launch.

In another embodiment not shown in the figures, the cameras (3) and the corresponding polarized light sources (6) located proximal to the cameras (3) are distributed in a sphere such that the optical axes of all the cameras (3) and the preferred illumination orientation of each corresponding light source (6) are oriented towards an inner region of the sphere, the inner region of the sphere being configured to house the part (2) therein. All the embodiments described for Figures 1a, 1b, 2a, 2b, and 3 are applicable to this embodiment.

In a particular case, the area of interest (4) coincides with, comprises or is comprised in the inner region.

In the device (1) of this embodiment that is not shown, the inner region of the sphere comprises the center of the sphere.

Optionally, the device (1) of this embodiment that is not shown comprises means (8) for placing the part (2) in the area of interest (4). More particularly, the means (8) are configured to place the part (2) in the inner region of the sphere either by free fall or by means of a launch.

The device (1) of any of the preceding embodiments can carry out a method for determining in a part (2) made of a first material the presence of defects (2.1) and/or of at least one second material (2.2) on its surface different from the first material, wherein
- either the first material is such that it repolarizes an incident light on the part (2), and the second material (2.2) or the defects (2.1) are such that they do not repolarize the incident light,
- or the first material is such that it does not repolarize the incident light on the part (2), and the second material (2.2) or the defects (2.1) are such that they do repolarize the incident light,
wherein the method comprises the following steps:
a activating, by means of the processor (7), the polarized light source (6) and the camera (3) of the device (1), capturing an image of a part (2) wherein the image comprises at least one first channel corresponding to the image captured by the sensor in the first wavelength and a second channel corresponding to the image captured by the sensor in the second wavelength;
b processing, by means of the processor (7), the received image by carrying out the following steps:
   - by using the first channel of the image, segmenting the received image by establishing a path which determines the boundary separating the regions of the image which correspond to the background and to the part (2);
   - establishing the region of the image which corresponds to the inside of the boundary as the image corresponding to the second channel; and
c determining the presence of defects (2.1) and/or of the at least one second material (2.2) on the surface of the part (2) different from the first material of the part (2) based on the processed image.

In one embodiment, wherein step c) is carried out by the processor (7) of the device (1).

In one embodiment, the activation of each of the cameras (3) and of the light source (6) located proximal to each camera (3) in step a) is sequential, such that the activation of one of the cameras (3) and of the corresponding light source (6) located proximal to said camera (3) is carried out by keeping the remaining cameras (3) and polarized light sources (6) switched off.

In one embodiment, the method comprises an additional step of generating, by means of the processor (7), a computational model of the part (2) by means of reconstruction based on the images processed in step b), either directly or by means of an image post-processing.

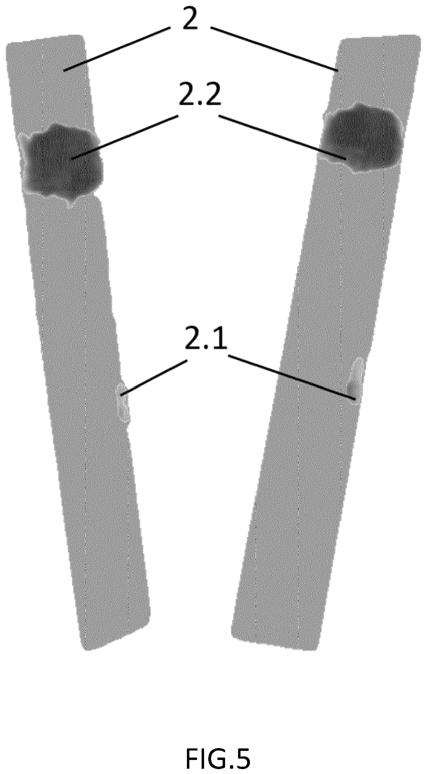

Figure 5 shows the processed images obtained by the device (1) of the invention according to one embodiment.

The images show a part (2) on the surface of which there is adhered a contaminating material (2.2) and said part having a certain defect (2.1). These images have been obtained and processed by means of the device (1) of the invention. As a result, the parts (2) show a change in brightness only in the areas where there is contaminating material (2.2) and defects (2.1), and it is possible to perfectly distinguish where said material (2.2) and defects (2.1) are located. Furthermore, the images do not show any glare in the parts (2) derived from the reflections of the light off the surfaces of the device (1), particularly off the background surface (5).

The images have been processed by the processor (7) using the channel of the first wavelength for segmenting the part (2) with respect to the background. Furthermore, the processed images show the channel of the second wavelength on the inside of the part (2).

## Claims

1. Device (1) for determining in a part (2) made of a first material the presence of defects (2.1) and/or at least one second material (2.2) on its surface different from the first material, wherein
- either the first material is such that it repolarizes an incident light on the part (2), and the second material (2.2) or the defects (2.1) are such that they do not repolarize the incident light,
- or the first material is such that it does not repolarize the incident light on the part (2), and the second material (2.2) or the defects (2.1) are such that they repolarize the incident light;
wherein the device (1) comprises:
- at least one camera (3) for capturing images, the at least one camera (3) being oriented towards an area of interest (4) and comprising an image sensor and an optic having an optical axis, wherein the optic is configured to focus an image on the image sensor and to frame at least part of the area of interest (4);
- a background surface (5) configured to be the image background, at least in the framing of the optic of the at least one camera (3);
- at least one polarized light source (6) with linear polarization located proximal to the at least one camera (3) and configured to, in the operating mode, illuminate a part (2) located between the at least one camera (3) and the background surface (5);
- a processor (7) configured to receive the captured images and process them;
wherein
- the optic of the at least one camera (3) comprises a linearly polarized light polarizer wherein the polarization direction is oriented substantially perpendicular to the polarization direction of the polarized light emitted by the at least one light source (6) when the light source (6) is activated in the operating mode emitting polarized light;
- the image sensor of the at least one camera (3) is sensitive at least to a first wavelength and to a second wavelength, wherein the second wavelength is different from the first wavelength;
- the background surface (5) has a color corresponding to the first wavelength, said color being different from the color of the part (2);
- the processor (7) is further configured to carry out the following steps:
a. activating the polarized light source (6) and the camera (3), capturing an image of a part (2) wherein the image comprises at least one first channel corresponding to the image captured by the sensor in the first wavelength and a second channel corresponding to the image captured by the sensor in the second wavelength;
b. processing the received image by carrying out the following steps:
- by using the first channel of the image, segmenting the received image by establishing a path which determines the boundary separating the regions of the image which correspond to the background and to the part (2);
- establishing the region of the image which corresponds to the inside of the boundary as the image corresponding to the second channel.

2. Device (1) according to the preceding claim, wherein the processor (7) is further configured to carry out the following step:
c. determining the presence of defects (2.1) and/or of the at least one second material on the surface of the part (2) different from the first material of the part (2) based on the processed image.

3. Device (1) according to any of the preceding claims, wherein the light from the polarized light source (6) comprises at least the first wavelength and the second wavelength, preferably being white light.

4. Device (1) according to any of the preceding claims, wherein the background surface (5) is configured to be the image background at least in an area illuminated by the polarized light source (6).

5. Device (1) according to any of the preceding claims, wherein the optical axis of the at least one camera (3) and the preferred illumination direction of the polarized light source (6) are parallel, preferably being configured as an illumination ring around the optic of the camera (3).

6. Device (1) according to any of the preceding claims, wherein the at least one camera (3) is a plurality of cameras (3), and wherein:
- each of the cameras (3) is located in space in a different position and oriented towards the area of interest (4);
- each of the cameras (3) is located proximal to a different polarized light source (6) which is configured to, in the operating mode, illuminate the part (2);
- the optic of each of the cameras (3) comprises a linear light polarizer wherein the polarization direction is oriented substantially perpendicular to the polarization direction of the polarized light emitted by its corresponding polarized light source (6) when the light source (6) is activated in the operating mode emitting polarized light;
- each of the sensors of the cameras (3) is sensitive at least to the first wavelength and to the second wavelength;
- the processor (7) is configured to carry out steps a) and b) for each of the cameras (3).

7. Device (1) according to the preceding claim, wherein the processor (7) is further configured to determine the presence of defects (2.1) and/or the at least one second material (2.2) on the surface of the part (2) different from the first material of the part (2) based on the images processed in step b) for each of the cameras (3).

8. Device (1) according to any of claims 6 or 7, wherein the activation of each of the cameras (3) and of the corresponding light source (6) located proximal to each camera (3) is sequential, such that the activation of one of the cameras (3) and of the corresponding light source (6) located proximal to said camera (3) is carried out by keeping the remaining cameras (3) and polarized light sources (6) switched off.

9. Device (1) according to any of claims 6 to 8, wherein the background surface (5) for each of the cameras (3) is configured as an essentially closed surface.

10. Device (1) according to any of claims 6 to 9, wherein the cameras (3) and the corresponding polarized light sources (6) located proximal to the cameras (3) are distributed in a barrel such that the optical axes of all the cameras (3) and the preferred illumination orientation of each light source (6) are oriented towards an inner region of the barrel, the inner region of the barrel being configured to house the part (2) therein and wherein preferably, the inner region of the barrel at least partially comprises an axis of the barrel, the axis of the barrel connecting the centers of the upper and lower bases thereof.

11. Device (1) according to any of claims 6 to 10, wherein the processor (7) is further configured to generate a computational model of the part (2) by means of reconstruction based on the images processed in step b), either directly or by means of an image post-processing.

12. Method for determining in a part (2) made of a first material the presence of defects (2.1) and/or of at least one second material (2.2) on its surface different from the first material by means of the device (1) according to any of claims 1 to 11, wherein
- either the first material is such that it repolarizes an incident light on the part (2), and the second material (2.2) or the defects (2.1) are such that they do not repolarize the incident light,
- or the first material is such that it does not repolarize the incident light on the part (2), and the second material (2.2) or the defects (2.1) are such that they do repolarize the incident light,
wherein the method comprises the following steps:
a activating, by means of the processor (7), the polarized light source (6) and the camera (3) of the device (1), capturing an image of a part (2), wherein the image comprises at least one first channel corresponding to the image captured by the sensor in the first wavelength and a second channel corresponding to the image captured by the sensor in the second wavelength;
b processing, by means of the processor (7), the received image by carrying out the following steps:
- by using the first channel of the image, segmenting the received image by establishing a path which determines the boundary separating the regions of the image which correspond to the background and to the part (2);
- establishing the region of the image which corresponds to the inside of the boundary as the image corresponding to the second channel; and
c determining the presence of defects (2.1) and/or of the at least one second material (2.2) on the surface of the part (2) different from the first material of the part (2) based on the processed image.

13. Method according to the preceding claim, wherein step c) is carried out by the processor (7).

14. Method according to any of claims 12 to 13 carried out by the device (1) according to claim 9, wherein the activation of each of the cameras (3) and of the light source (6) located proximal to each camera (3) in step a) is sequential, such that the activation of one of the cameras (3) and of the corresponding light source (6) located proximal to said camera (3) is carried out by keeping the remaining cameras (3) and polarized light sources (6) switched off.

15. Method according to any of claims 12 to 14, comprising an additional step of generating, by means of the processor (7), a computational model of the part (2) by means of reconstruction based on the images processed in step b), either directly or by means of an image post-processing.
